(19) Europäisches Patentamt
European Patent Office
Office européen des brevets

(11) **EP 3 128 071 B1**

(12) **EUROPEAN PATENT SPECIFICATION**

(45) Date of publication and mention of the grant of the patent:
**17.06.2020 Bulletin 2020/25**

(21) Application number: **15774301.4**

(22) Date of filing: **20.03.2015**

(51) Int Cl.:
**B32B 5/02** *(2006.01)*          **D06N 3/00** *(2006.01)*

(86) International application number:
**PCT/JP2015/058526**

(87) International publication number:
**WO 2015/151872 (08.10.2015 Gazette 2015/40)**

(54) **ARTIFICIAL LEATHER**

KUNSTLEDER

CUIR SYNTHETIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2014 JP 2014072601**
**31.03.2014 JP 2014072604**

(43) Date of publication of application:
**08.02.2017 Bulletin 2017/06**

(73) Proprietor: **Toray Industries, Inc.**
**Tokyo 103-8666 (JP)**

(72) Inventors:
• **KURODA, Akito**
  **Otsu-shi**
  **Shiga 520-8558 (JP)**
• **HIROSE, Tomoharu**
  **Osaka-shi**
  **Osaka 530-8222 (JP)**
• **UENO, Masaru**
  **Anpachi-gun**
  **Gifu 503-2395 (JP)**
• **YAMANO, Koji**
  **Anpachi-gun**
  **Gifu 503-2395 (JP)**

• **OKAJIMA, Katsuya**
  **Osaka-shi**
  **Osaka 530-8222 (JP)**
• **MATSUZAKI, Yukihiro**
  **Anpachi-gun**
  **Gifu 503-2395 (JP)**
• **MATSUOKA, Yu**
  **Tokyo 103-8666 (JP)**
• **NISHIMURA, Hajime**
  **Otsu-shi**
  **Shiga 520-8558 (JP)**
• **YANAGISAWA, Satoshi**
  **Anpachi-gun**
  **Gifu 503-2395 (JP)**

(74) Representative: **Hoefer & Partner Patentanwälte mbB**
**Pilgersheimer Straße 20**
**81543 München (DE)**

(56) References cited:
EP-A1- 1 978 153          EP-A1- 2 123 824
JP-A- S6 350 580          JP-A- 2003 253 571
JP-A- 2006 193 848        JP-A- 2011 214 211
JP-A- 2012 136 801        JP-A- 2012 136 801
JP-A- 2012 184 537        JP-A- 2013 194 327
JP-A- 2014 034 752

**Description**

Technical Field

The present invention relates to artificial leather and a production method therefor.

Background Art

Suede-like artificial leather comprising an entangled fiber mass including ultrafine fibers and a polymeric elastomer has durability, consistency, and other excellent characteristics which are absent in natural leathers. Because of such features, suede-like artificial leather has been used in a wide variety of applications including garments, furniture, and automobile interior materials. Even wider applications are on the way, and there is a demand for the development of an artificial leather having qualities other than those of suede-like artificial leather.

One such example is nubuck-like artificial leather. Natural nubuck leather is a product obtained by napping the grain side of leather as opposed to suede leather. Accordingly, nubuck leather has surface denseness and flatness like those of the grain side of the leather simultaneously with a wet feel. However, the qualities inherent to nubuck leather have never been sufficiently realized by nubuck-like artificial leather or synthetic leathers on the market.

With regard to the artificial leathers having a nubuck-like feel, one proposal is a method including the steps of applying a resin solution to a leather-like sheet of ultrafine fibers on its surface to be napped, and napping the surface, to thereby realize a dense feel (see Patent document 1). This method, however, had the structural drawback of frequent exposure of the resin component on its surface, and this resulted in unfavorable appearance due to the difference in color development property between the ultrafine fibers and the resin.

Exemplary known methods for imparting new quality to artificial leather include those imparting stretchability, although the artificial leather produced is not nubuck-like leather. Exemplary such methods include a method wherein an artificial leather prepared by laminating and integrating an entangled fiber mass of ultrafine fibers with a woven knitted fabric and impregnating the laminate with a polymeric elastomer resin for solidification is subjected to a treatment wherein the entangled fiber mass of ultrafine fibers is shrunk followed by the removal of the woven knitted fabric (see Patent document 2); a method wherein a latent crimp yarn is used for the woven knitted fabric, and stretchability is imparted by heat treatment (see Patent document 3); and a method wherein a polymeric elastomer-containing nonwoven fabric is shrunk in the machine direction by using the resilience of the stretchable sheet followed by heat setting (see Patent document 4). These documents, however, have been silent about the structure for imitating a nubuck-like dense and wet feel.

In another method which has been proposed as a method for imitating a structure of natural leather, a heat shrinkable woven knitted fabric is shrunk after its integration with a polymeric elastomer-containing nonwoven fabric of ultrafine fibers to thereby impart surface irregularity pattern resembling the grains of natural leather (see Patent document 5). However, artificial leather obtained according to this proposal has coarse surface inequalities, and nubuck-like surface feel and consistent appearance were not realized. An suede-type artificial leather leather with higher surface evenness is obtained by a process including entangling the nonwoven pile forming fabric with a textile fabric and subsequently heat shrinking this assembled sheet base as disclosed in document 6.

Prior Art Documents

Patent Documents

Japanese Unexamined Patent Publication (Kokai) No. HEI-9-59878
Japanese Unexamined Patent Publication (Kokai) No. 2003-89984
[Patent document 3] Japanese Unexamined Patent Publication (Kokai) No. 2011-179127
[Patent document 4] Japanese Unexamined Patent Publication (Kokai) No. 2013-181252
[Patent document 5] Japanese Unexamined Patent Publication (Kokai) No. 2012-136801
[Patent document 6] Japanese Unexamined Patent Publication (Kokai) No. 2012-184537.

Summary of the Invention

[Problems to be solved by the invention]

As described above, the prior art artificial leathers have a suede-like dry feel, and the wet feel of artificial leather according to the present invention was not sufficiently realized. The artificial leather provided with a high density feel also suffered from the problem of color tone difference between the ultrafine fibers and the polymeric elastomer due to the presence of the surface rich with the polymeric elastomer. There has been no artificial leather that has realized the consistent appearance as in the case of the artificial leather according to the present invention.

Accordingly, an object of the present invention is to provide artificial leather including an entangled fiber mass of ultrafine fibers and a polymeric elastomer which has a wet feel and an elegant consistent appearance similar to those of the natural nubuck leather.

Another object of the present invention is to provide a production method for efficient production of artificial leather having the properties described above.

Means of Solving the Problems

In order to realize the objects described above, the inventors of the present invention have made an intensive study and found that it is important to apply fine surface inequalities of a size indiscernible to the naked eye on the napped surface of the artificial leather to provide dense and wet feel resembling natural nubuck leather and elegant consistent appearance. The present invention is based on such finding.

Accordingly, the artificial leather of the present invention is an artificial leather according to claim 1. including an entangled fiber mass of ultrafine fibers having a monofilament fineness of 0.01 dtex or more and 0.50 dtex or less and a polymeric elastomer, wherein at least one surface is napped; the cross-sectional profile curve of the napped surface has an arithmetic average height Pa of 26 $\mu$m or more and 80 $\mu$m or less; the arithmetic average height Pa of the cross-sectional profile curve of the opposite surface is 20% or more and 80% or less of the cross-sectional roughness Pa of the napped side; and the existence frequency of the asperity peaks found in the cross-sectional profile curve of the napped surface is 1.8 or more and 20 or less per 1.0 mm; and a woven or knitted fabric lamination is present near the opposite surface at a depth position of 10% or more and 50% or less.

According to a preferred embodiment of the artificial leather of the present invention, the artificial leather has a residual elongation rate of 2.0% more than and 12% or less when measured under the conditions including a load of 2 kgf/cm, loading time of 2 hours, and time interval of 1 hour between the load removal and the measurement.

According to a preferred embodiment of the artificial leather of the present invention, the artificial leather does not partially contain thermally compressed part or resin-coated part.

The production method for artificial leather includes steps (1) to (3) given below that are carried out in this order:

(1) a step for producing a laminated sheet comprising an entangled fiber mass of ultrafine fibers with a single fiber fineness of 0.01 to 0.50 dtex or of ultrafine fiber-generating type fibers able to form such ultrafine fibers, and a shrinkable woven or knitted fabric that are integrated into a laminate,

(2) a step for producing an artificial leather precursor sheet comprising an entangled fiber mass of ultrafine fibers, a woven or knitted fabric, and a polymer elastomer, by carrying out: (A) treatment for impregnation of the laminated sheet with a polymer elastomer and coagulation thereof, and (B) treatment for development of ultrafine fibers in the case where the entangled fiber mass is of ultrafine fiber-generating type fibers, which may be carried out in an arbitrary order, and

(3) a step for performing treatment for shrinking the precursor sheet so that the overall area shrinkage rate of the precursor sheet is 12% to 50% as a result of its coordinated shrinkage with the woven or knitted fabric.

According to a preferred embodiment of the production method for artificial leather, the temperature used in the treatment of the woven or knitted fabric and the laminate sheet before the start of step (3) is lower than the treatment temperature used in step (3).

According to a preferred embodiment of the production method of artificial leather, the treatment temperature used in step (3) is 120°C or more.

According to a preferred embodiment of the production method for artificial leather, the treatment temperature used in step (3) is 130°C or more.

According to a preferred embodiment of the production method for artificial leather, the entangled fiber mass of the step (1) includes ultrafine fiber-generating fibers, and the treatment (B) is followed by the treatment (A) in the step (2).

According to a preferred embodiment of the production method for artificial leather, the method used for integrating the entangled fiber mass of ultrafine fibers and the woven or knitted fabric into a laminated sheet is based on entanglement by needle punching.

According to a preferred embodiment of the production method for artificial leather, the shrinking treatment is conducted by dry heating treatment before dyeing, and the dry heating temperature is 120°C to 180°C.

According to a preferred embodiment of the production method for artificial leather, the shrinking treatment is conducted by bathing treatment before dyeing, and the bath temperature is in the range of 120°C to 150°C.

Advantageous Effect of the Invention

The present invention has enabled the production of an artificial leather that has high density napping and a wet feel agreeable to fingers similar to those of natural leather nubuck, and that has a consistent appearance with little color inconsistency even in the case of short napping.

Brief Description of the Drawings

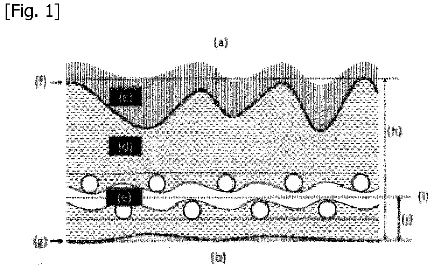

[FIG. 1] FIG. 1 is a schematic cross-sectional view for illustrating the structure of the artificial leather according to the present invention.

Description of Preferred Embodiments

The artificial leather of the present invention is an artificial leather including an entangled fiber mass of ultrafine fibers having a monofilament fineness of 0.01 dtex or more and 0.50 dtex or less and a polymeric elastomer, wherein at least on one surface is napped; the cross-sectional profile curve of the napped surface has an arithmetic average height Pa that is 20% or more and 80% or less of the cross-sectional roughness Pa of the napped side; and the existence frequency of the asperity peaks found in the cross-sectional profile curve of the napped surface is 1.8 or more and 20 or less per 1.0 mm; and a woven or knitted fabric lamination is present near the opposite surface at a depth position of 10% or more and 50% or less.

The artificial leather of the present invention is one having a structure wherein an entangled fiber mass such as a nonwoven fabric of ultrafine fibers is impregnated with a polymeric elastomer. FIG. 1 is a schematic cross-sectional view for illustrating the structure of the artificial leather of the present invention, and the artificial leather has a structure wherein a napped surface is formed on one side and a woven or knitted fabric is laminated at a position near the opposite surface.

In FIG. 1, the artificial leather according to the present invention has a nonwoven fabric layer (d) including an entangled fiber mass of ultrafine fibers and a polymeric elastomer, while having a napped layer (c) on at least one side thereof. In this structure, a woven or knitted fabric layer (e) is disposed near the surface (b) that is opposite to the napped surface (a) having the napped layer (c).

The napped surface of the artificial leather according to the present invention is a napped surface in which the arithmetic average height Pa of the cross-sectional profile curve defined by the following equation (1) is 26 $\mu$m or more and 100 $\mu$m or less.

[Formula 1]

$$Pa = \frac{1}{l_n} \int_0^{l_n} |Z(x)| dx \qquad (1)$$

wherein Z(x) is the cross-sectional profile curve in the observation of the cross section of artificial leather according to the present invention performed by an electron microscope, which is a function representing the height of a cross sectional position at the horizontal position x in the cross section of the artificial leather. The zero point in the Z(x) is defined so that the position of the mean value of the cross sectional position in the measurement range is 0. The cross sectional position to be adopted is the boundary between the napped layer of the artificial leather and the nonwoven fabric layer (see FIG. 1(f)). Furthermore, ln is the length evaluated in the measurement, and the value of ln = 1.0 mm is used. In the present invention, the Pa value used is the average of measurements taken at 10 positions at different locations in the cross section.

In the artificial leather according to the present invention, the upper limit of the Pa value of the napped surface is 80 $\mu$m, and still more preferably 60 $\mu$m. If the Pa value of the napped surface is within the above numerical range, it means that fine surface inequalities are present on the napped surface. These fine surface inequalities realize highly dense napping, an agreeable wet feel to fingers, and an elegant consistent appearance similar to those of nubuck.

These fine surface inequalities are the result of deformation generated when the nonwoven fabric layer of ultrafine fibers and the interior polymeric elastomer shrink in coordination with the shrinking of the woven or knitted fabric integrated in the artificial leather. Because of such surface inequalities, the artificial leather according to the present invention provides a dense resilience feel similar to that of the grain side of natural leather.

The fine surface inequalities on the napped surface are also advantageous in view of appearance. The amount of napping per unit area increases with the amount of surface inequalities. The artificial leather according to the present invention realizes a consistent appearance as a result of the high density napping covering the outer layer, which solves the problem of poor outer appearance due to a difference in color tone between the polymeric elastomer and the fibers.

It also serves to realize the additional effect of favorable lighting. These effects are particularly significant in the case of short napping resembling nubuck.

When the Pa value of the napped surface is less than 26 $\mu$m in the present invention, the strain caused by the shrinkage of the nonwoven fabric layer is insufficient for realizing a sufficient resilience. When the Pa value of the napped surface is more than 200 $\mu$m, a smooth feel is not realized due to excessive surface inequalities.

In the artificial leather according to the present invention, the Pa value of the surface opposite to the napped surface is 20% or more and 80% or less of the Pa value of the napped side. The upper limit of the proportion of the Pa value of the opposite surface to the Pa value of the napped surface is preferably 80% or less, and more preferably 65% or less. Compared to this, the lower limit of the proportion of the Pa value of the opposite surface to the Pa value of the napped surface is preferably 20% or more, and more preferably 40% or more. Here, the cross-sectional profile curve of the surface opposite to the napped surface corresponds to FIG. 1(g). In the artificial leather according to the present invention, it is important that a woven or knitted fabric is laminated near the surface opposite to the napped surface. A smaller Pa value of the surface opposite to the napped surface compared to the napped surface corresponds to a state in which the integrated woven or knitted fabric is under tension caused by the shrinkage. The fine surface inequalities on the napped surface is realized by the shrinking power of the woven or knitted fabric laminated near the side opposite to the napped surface.

To realize a nubuck-like surface feel, it is important to shrink the woven or knitted fabric and simultaneously control the Pa value of the surface opposite to the napped surface in the range described above. In addition, since the woven or knitted fabric in tension is integrated, the artificial leather according to the present invention has adequate anti-elongation property. This anti-elongation property enables the retention of good surface quality and appearance even if a load is applied to the artificial leather. When the Pa value of the surface opposite to the napped surface is more than 80%, the shrinking power of the woven or knitted fabric will be insufficient and the artificial leather will not be able to have a good surface feel, and the artificial leather may not be able to maintain good quality when a load is applied. On the other hand, if the Pa value of the surface opposite to the napped surface is less than 20%, it means that the woven or knitted fabric has undergone excessive shrinkage and excessive surface inequalities have been formed on the napped surface side, and this result in the failure of realizing a consistent quality.

The artificial leather according to the present invention may be either one in the form having a napped surface only on one side as shown in FIG. 1 or one in the form having napped surfaces on both surfaces. When the artificial leather according to the present invention has napped surfaces on both sides, the side with a greater Pa value for the cross section is referred to as the napped surface, and the side with a smaller Pa value is referred to as the side opposite to the napped surface.

In the artificial leather of the present invention, the existence frequency of asperity peaks found in the cross-sectional profile curve of the napped surface is preferably 1.8 or more, more preferably 2.0 or more, and still more preferably 2.2 or more, per 1.0 mm. The upper limit of the number of asperity peaks is preferably 20 or less, more preferably 15 or less, and still more preferably 10 or less, per 1.0 mm. The number of asperity peaks means the number of points x satisfying the requirements of the following equation (2) when the cross-sectional profile curve Z(x) is drawn in such a manner that the asperity peaks are in the positive direction.

[Formula 2]

$$\frac{d}{dx}Z(x) = 0, \qquad \frac{d^2}{dx^2}Z(x) < 0 \qquad (2)$$

The value obtained by dividing this number by the measurement length (mm) shows the number of asperity peaks per 1.0 mm.

In the artificial leather according to the present invention, the existence frequency of asperity peaks found on the napped surface is important in realizing a favorable feel. The frequency of asperity peaks described above corresponds to several hundreds of micrometers, and this is approximately consistent with the intervals of fingerprint lines of human beings. When surface inequalities are present on the napped surface at a frequency as described above, the fine asperity peaks will enter the gaps between fingerprint lines, and a wet feel agreeable to fingertips is thereby realized. With regard to the appearance, consistency and flatness will not be lost if the surface inequalities are in the range described above. When the number of asperity peaks per 1.0 mm is less than 1.8, the surface inequalities will be larger than the scale of the fingerprint lines and sufficient improvement in feel will not be realized.

Such a frequency also results in impaired consistency in the appearance, and surface inequalities and patterns that can be visually identified with the naked eye will be found on the surface. On the other hand, when the number of asperity peaks per 1.0 mm is in excess of 20, the surface inequalities will be small, and the fingerprint will not be able to perceive the fine surface inequalities by touch, and in such a case, sufficient improvement in the feel will not be realized.

In the artificial leather according to the present invention, a woven or knitted fabric lamination is present near the side opposite to the napped surface at a depth position of 10% or more and 50% or less. The depth of the woven or knitted fabric lamination as referred to herein means the proportion of the distance (FIG. 1(j)) between the surface (FIG. 1 (b)) opposite to the napped surface of the artificial leather and the center (FIG. 1 (i)) of the scrim layer to the total thickness of the artificial leather. In a more preferable embodiment, the depth of the woven or knitted fabric lamination is 40% or less. In the entangled fiber body as referred to in the present invention, the surface nearer to the woven or knitted fabric, which is opposite to the napped surface, is flatter and the napped surface on the other side has a surface irregularity structure with a dense, wet feel due to a difference in the shrinking power between the woven or knitted fabric layer and the entangled fiber mass layer (the nonwoven fabric layer).

In order to realize the structure, the woven or knitted fabric is preferably located at a position nearer to the surface opposite to the napped surface. If the woven or knitted fabric is at a position remoter than the position depth of 50% from the surface opposite to the napped surface, a desired good feel is less likely to be realized. In a preferred embodiment, the lower limit of the lamination depth is preferably at least 15%, and more preferably at least 20%. If the lamination depth is too shallow, the nonwoven fabric layer may not be capable of shrinking in coordination with the woven or knitted fabric, and this may result in excessively large surface inequalities on the surface.

The artificial leather according to the present invention preferably has a residual strain rate of 2.0% or more and 12% or less when measured under the conditions of a load of 2 kgf/cm, a loading time of 2 hours, and a time interval of 1 hour between the load removal and the measurement. The value of the residual strain rate is more preferably 3.0% or more and 10% or less, and still more preferably 4.0% or more and 8.0% or less.

For the artificial leather according to the present invention, a good surface feel is realized by shrinking the nonwoven fabric layer in the artificial leather. In the meanwhile, surface fine inequalities in artificial leather obtained by this method may be lost to detract from the quality if the artificial leather is stretched by the application of a large load. However, if the artificial leather according to the present invention has a residual strain rate of 12% or less, it will be capable of retaining its good feel and appearance possessed in the non-stretched state even if a load is applied. This feature is particularly advantageous when the artificial leather is used for applications where the artificial leather receives repetitive loading, for example, seat surfaces of car seats, sofas, and garments. In addition, a residual strain of 2.0% or more allows a moderate deformation, and this enables effective fitting of the leather to the body as it is used over a long period.

In a preferred embodiment, the artificial leather according to the present invention does not include thermally compressed parts or resin-coated parts on the napped surface. Here, such thermally compressed parts include those formed by thermal embossing or the like. While surface inequalities can be formed on the surface of the artificial leather by partial compression or resin coating, such treatment can create parts where no nap is present on the surface. Such a dense, wet feel as intended by the present invention may not be realized in these parts where no nap is present. However, when the intended uses merely require partial presence of a good feel, such treatments as described above may be conducted as necessary.

The woven or knitted fabric constituting the artificial leather according to the present invention is laminated and integrated with an entangled fiber mass such as nonwoven fabric of ultrafine fiber-generating fibers. When the needle punching technique is used for the laminating step, the woven or knitted fabric may be sometimes broken by the needle depending on the type of the yarn, and a decrease in the strength of the artificial leather may be caused accordingly. As a means of suppressing such situation, the type of the yarn constituting the woven or knitted fabric is preferably a twisted yarn.

When the yarn constituting the woven or knitted fabric has a twist count of 500 T/m or less, the filaments constituting the yarn may not be bound tightly enough and may be easily caught and damaged by the needle. In the meanwhile, an excessively large twist count may result in excessively strong twisting of the yarn, and this is not favorable in view of softening of the texture of the product. Accordingly, the twist count of a twisted yarn is preferably 500 T/m or more and 4500 T/m or less, more preferably 1000 T/m or more and 4000 T/m or less, still more preferably 1500 T/m or more and 4000 T/m or less, and most preferably 2000 T/m or more and 4000 T/m or less.

The woven or knitted fabric used in the present invention is preferably one at least partly containing a twisted yarn (hard twist yarn) having a twist count as described above, and more preferably one constituted only of a hard twist yarn in view of ensuring high strength.

When the yarn constituting the woven or knitted fabric has a fineness (total fineness in the case of a multifilament) of 200 dtex or more, the woven or knitted fabric will have an excessively large metsuke (weight per unit surface area), leading to artificial leather having an excessively large metsuke. It will work to increase the rigidity of the woven or knitted fabric, and it will be difficult to ensure a sufficiently high softness required of artificial leather. The yarn constituting the woven or knitted fabric preferably has a fineness of 30 dtex or more and 150 dtex or less, and more preferably 50 dtex or more and 130 dtex or less in view of rigidity and metsuke.

The yarn constituting the woven or knitted fabric used for the present invention may have an average monofilament fineness of 1 dtex or more and 10 dtex or less. Also usable are ultrafine fibers having a monofilament fineness of 0.001 dtex or more and 1 dtex or less.

The yarn constituting the woven or knitted fabric preferably may be of a synthetic fiber such as polyester, polyamide, polyethylene, polypropylene, and a copolymer thereof. Of these, it is preferred to use synthetic fibers of polyester, polyamide, or a copolymer thereof, which may be used alone or as a composite or mixture thereof. The candidate yarns for constituting a woven or knitted fabric include filament yarn, spun yarn, and mixed yarn of filaments and short fibers.

The woven or knitted fabric used for the present invention may be a woven or knitted fabric containing composite fibers wherein two or more polymers are incorporated in the form of side-by-side or eccentric-core-shell composite fiber (hereinafter occasionally referred to as "composite fiber of side-by-side type or other type"). For example, in the case of a composite fiber of side-by-side type or other type containing two or more polymers having different intrinsic viscosities (IV), different inner strains are generated in the two components by the stress concentrated on the high viscosity side during elongation. Because of this inner strain, the high viscosity side will experience larger shrinkage due to a difference in the elastic recovery after the elongation and a difference in heat shrinkage in the heat treatment step, and the strain caused in the monofilament will result in crimping in the form of a three dimensional coil.

The term "woven or knitted fabric" as used for the present invention collectively refers to woven fabrics and knitted fabrics. Exemplary knitted fabrics used for the present invention include plain, twill, and satin fabrics, and various other woven fabrics based on such woven structures; and exemplary knitted fabrics include those produced by warp knitting, weft knitting (such as tricot), or lace making, and various other knitted fabrics based on those knitted structures. Of these, the preferred are woven fabrics in view of workability, and in particular, plain weave fabrics in view of cost. The weaving density of a woven fabric may be selected appropriately depending on the total density of the yarn and installations and conditions used for entangling a nonwoven fabric with a woven or knitted fabric.

In the present invention, a water-soluble resin may be optionally applied to such a woven or knitted fabric.

If a water-soluble resin is applied to the woven or knitted fabric, the surface of the yarn constituting the woven or knitted fabric is protected by the water-soluble resin, the parts where the yarn is in direct contact with the polymeric elastomer on the surface of the yarn constituting the woven or knitted fabric will be formed sporadically instead of continuously, thus making it possible to control the adhesion area. This enables the production of an artificial leather having a soft texture while retaining a required strength and size stability as a result of adequate adhesion.

Exemplary water-soluble resins include polyvinyl alcohol, polyethylene glycol, saccharide, and starch. Of these, the preferred are polyvinyl alcohols having a saponification degree of or more 80%. Exemplary methods usable for the application of such a water-soluble resin to the woven or knitted fabric include impregnation of the woven or knitted fabric with an aqueous solution of the water-soluble resin followed by drying. The water-soluble resin applied to the woven or knitted fabric may be removed by using hot water or the like after applying a polymeric elastomer as described below.

In the production method for artificial leather, the woven or knitted fabric obtained in the preceding step and the entangled fiber mass of ultrafine fiber-generating fibers of a polymeric substance or ultrafine fiber-generating fibers of two or more polymeric substances having different solubilities in the solvent are entangled for integration, thereby providing a laminated sheet.

Ultrafine fibers usable to constitute the artificial leather according to the present invention may be obtained by direct spinning of the ultrafine fibers, use of a ultrafine fiber-generating fiber containing two or more polymeric substances having different solubilities in the solvent, and the like. A more preferable method is the use of ultrafine fiber-generating fibers. When an entangled fiber mass of ultrafine fiber-generating fibers and a woven or knitted fabric are preliminarily integrated by entanglement, and the integrated sheet is treated with a solvent to generate ultrafine fibers, a laminated sheet composed of the integrated and entangled ultrafine fibers and the woven or knitted fabric can be produced without damaging the ultrafine fibers.

Exemplary ultrafine fiber-generating fibers that can be used include sea-island type composite fibers formed of two types of thermoplastic resins having different solubilities in a particular solvent used for the sea and island components from which the sea component is removed by using a solvent to leave the island component as ultrafine fibers; and peel-type composite fibers using two types of thermoplastic resins alternately arranged in a radial or multilayer manner in the fiber surface, which are treated in a solvent for peeling and separation to provide ultrafine fibers. Of these, preferred in view of softness and texture of the substrate are sea-island type composite fibers since adequate gaps can be provided among the island component regions, namely among the ultrafine fibers in the interior of the fiber bundle, by removing the sea component.

The sea-island type composite fibers that can be used include polymer alignment type ones wherein two components, namely, the sea component and the island component, are spun in an aligned manner by using an sea-island type nozzle, and mixed spun type ones wherein two components, namely, the sea component and the island component, are spun after mixing these components. Of these, sea-island type composite fibers obtained by the polymer alignment type spinning are preferred in view of producing ultrafine fibers having consistent fineness.

The island component of the sea-island type composite fiber, namely, the ultrafine fiber constituting the artificial leather according to the present invention, may be a synthetic fiber selected from polymers including polyesters such as polyethylene terephthalate, polybutylene terephthalate, polytrimethylene terephthalate, and polyethylene-2,6-naphthalene dicarboxylate; polyamides such as 6-nylon and 66-nylon, and others such as acryl polyethylene and polypropylene. Of these, the preferred for use are polyester fibers containing a polymer such as polyethylene terephthalate, polybutylene terephthalate, or polytrimethylene terephthalate in view of the excellent strength, size stability, light resistance, and staining. The artificial leather according to the present invention may also contain ultrafine fibers of different materials mixed together to an extent not adversely affecting the advantages of the present invention.

In the present invention, the polymer forming the island component may contain inorganic particles such as titanium oxide, lubricant, pigment, heat stabilizer, UV absorber, electroconductive agent, heat storage agent, or antibiotic, which may be added depending on the intended application.

In the present invention, it is important that the ultrafine fibers constituting the entangled fiber mass of the artificial leather has an average monofilament fineness of 0.01 dtex or more and 0.50 dtex or less. When the average monofilament fineness of the ultrafine fibers is 0.50 dtex or less, preferably 0.30 dtex or less, and more preferably 0.20 dtex or less, the resulting artificial leather will enjoy excellent softness and nap quality as well as wet feel. On the other hand, when the average monofilament fineness of the ultrafine fibers is 0.01 dtex or more, preferably 0.04 dtex, and more preferably 0.10 dtex or more, the resulting artificial leather will enjoy excellent color development after dyeing, and high dispersibility and easy disentangling of the fibers in the napping treatment such as grinding with sandpaper.

As for the cross-sectional shape of ultrafine fibers, a circular cross section is suitable though fibers having cross sections of other shapes such as an ellipse, flat shape, polygon like triangle, sector, or cross may also be adopted.

In a preferred embodiment, the ultrafine fibers are in the form of a nonwoven fabric (a web of ultrafine fibers). Such nonwoven fabric can have a consistent, elegant appearance and texture. The non-woven fabric (a web of ultrafine fibers) may be either short-fiber nonwoven fabric or long-fiber nonwoven fabric, but short-fiber nonwoven fabric is preferred when importance is placed on texture and quality.

If short-fiber nonwoven fabric is to be used, the ultrafine fibers used preferably have a fiber length of 25 mm or more and 90 mm or less. Controlling the fiber length of the ultrafine fibers at 90 mm or less ensures high quality and good texture while controlling the fiber length at 25 mm or more serves to obtain an artificial leather with high abrasion resistance.

In the present invention, raw stock can be obtained by cutting the ultrafine fiber-generating fibers to predetermined length preferably after subjecting the ultrafine fiber-generating fibers to crimping treatment. The ultrafine fiber-generating fibers may also be used for a long fiber nonwoven fabric without cutting the ultrafine fiber-generating fibers to predetermined length. When texture and quality are important, however, the ultrafine fiber-generating fibers are preferably used in the form of a short-fiber nonwoven fabric after cutting to predetermined length.

Generally known methods may be used for the crimping and cutting. The resulting raw stock may be processed into a fiber web, for example, by using a crosslapper, and after the optional preliminary entanglement, the resulting fiber web may be further subjected to entanglement with a woven or knitted fabric.

The metsuke of the fiber web may be appropriately specified after considering the design of the final product, size alteration in the subsequent steps, and performance of the processing machine.

The production method for artificial leather includes the step of producing a laminated sheet composed of a woven or knitted fabric and an entangled fiber mass (nonwoven fabric) formed of ultrafine fibers or ultrafine fiber-generating fibers. The methods usable for entangling them include needle punching and water jet punching. Of these, the preferred is the use of needle punching for entangling them in view of the adhesion workability and the product quality. The fiber used to produce an entangled fiber mass is preferably an ultrafine fiber-generating fiber in view of the adhesion workability and the product quality.

The woven or knitted fabric is preferably a shrinkable fabric. The shrinking of the woven or knitted fabric may be realized by any one of heat treatment, treatment by chemical agent or solvent, mechanical treatment, and other types of treatment. In view of the productivity, the preferred embodiment is the use of heat treatment.

When a heat shrinkable woven or knitted fabric is used, the shrinkage rate of the woven or knitted fabric is such that the difference between the dry area shrinkage rate in dry heat treatment at a temperature of 100°C for 5 minutes and the dry area shrinkage in dry heat treatment at a temperature of 140°C for 5 minutes is in the range of 10% or more and 25% or less. In producing the artificial leather according to the present invention, it is important that the polymeric elastomer is applied to a laminated sheet composed of an entangled mass of ultrafine fibers (or ultrafine fiber-generating fibers) and a woven or knitted fabric, and then the woven or knitted fabric integrated in the sheet is shrunk.

In the meanwhile, a heat at around a temperature of 100°C may be occasionally applied in the drying step or the like in the midst of the production step, e.g., after the generation of ultrafine fibers. If the woven or knitted fabric is designed to exhibit a 10% or more difference in the area shrinkage of the woven or knitted fabric between 100°C and 140°C, the likely loss of the shrinkability of the woven or knitted fabric as a result of thermal hysteresis in the production step can be readily avoided. If the difference in the shrinkage at a temperature of 100°C and 140°C is 25% or less, the difference in the shrinkability between the entangled fiber mass layer (nonwoven fabric layer) and the woven or knitted fabric layer of the artificial leather will be at an appropriate level, and a good texture and consistent appearance will be easily realized at once.

The entanglement of the entangled fiber mass (the fiber web) of the ultrafine fiber-generating fibers and the woven or knitted fabric may be accomplished by different methods including a method wherein one woven or knitted fabric is laminated on the entangled fiber mass, a method wherein the entangled fiber mass is sandwiched by two woven or knitted fabric layers, and a method wherein the woven or knitted fabric is sandwiched between two fiber entangled masses. In view of the workability and the efficiency, the preferred is the method wherein the entangled fiber mass is sandwiched by two woven or knitted fabric layers.

The laminate sheet containing the entangled fiber mass (the nonwoven fabric) of the ultrafine fiber-generating fiber and the two woven or knitted fabric layers after the needle punching or the water jet punching may preferably have an apparent density of 0.15 to 0.30 g/cm$^3$. An apparent density of 0.15 g/cm$^3$ or more makes it possible to produce artificial leather having sufficiently high shape stability and dimensional stability. An apparent density of 0.30 g/cm$^3$ or less, on the other hand, serves to maintain adequate spaces to accommodate a polymer elastomer in a subsequent step.

The laminated sheet thus obtained containing the entangled fiber mass of ultrafine fiber-generating fibers and the woven or knitted fabric is preferably shrunk by dry heating and/or wet heating for further densification before the application of the polymeric elastomer in view of increasing its density. While this shrinking step may be conducted either before or after the generation of the ultrafine fibers, the shrinking step is preferably conducted before the generation of the ultrafine fibers in view of using the sea component polymer features of the ultrafine fiber-generating fiber.

The area shrinkage of the laminated sheet in this shrinking step is preferably in the range of or more 15% and 35% or less. When the area shrinkage is 10% or more, the effect of improving the quality will be realized favorably. When the area shrinkage is 35% or less, the woven or knitted fabric integrated with the nonwoven fabric will still be capable of undergoing shrinkage, and effective shrinking can still be conducted after applying a polymeric elastomer. More preferably, the area shrinkage is in the range of 13% or more and 30% or less, and still more preferably 15% or more and 25% or less.

When the shrinking treatment of the precursor sheet after the application of the polymeric elastomer is conducted by heat treatment, the temperature used for the dry heating or wet heating treatment of the laminated sheet used in this stage is preferably a temperature lower than that used in the shrinking treatment of the precursor sheet. When the temperature used for the heat treatment of the laminated sheet is lower than the temperature used for the heat treatment of the precursor sheet in the subsequent step, the shrinking effect will be efficiently realized in the subsequent step.

When the entangled fiber mass (nonwoven fabric) contains ultrafine fiber-generating fibers, the production method for artificial leather according to the present invention preferably includes the step of generating the ultrafine fibers having an average monofilament fineness of 0.01 dtex or more and 0.50 dtex or less as a result of treating the laminated sheet of the entangled fiber mass (nonwoven fabric) and the woven or knitted fabric. One method usable for the generation of the ultrafine fibers is the use of a the solvent for dissolution of one of the resins constituting the ultrafine fiber-generating fibers. Particularly preferred is the method using an ultrafine fiber-generating sea-island composite fiber wherein the sea component is of a readily soluble polymer and the island component is of a slightly soluble polymer and wherein the sea component is dissolved. The solvent used for the dissolution of the sea component may be an organic solvent such as toluene or trichloroethylene when the sea component is a polyolefin such as polyethylene or polystyrene. An aqueous solution of alkali such as sodium hydroxide may be used when the sea component is of a polylactic acid or a copolymeric polyester. This processing of the ultrafine fiber-generation (the treatment for sea component removal) may be accomplished by immersing an entangled fiber mass of ultrafine fiber-producing fibers in a solvent and squeezing the liquid.

The method preferably also includes the step of applying a polymeric elastomer to the entangled fiber mass of ultrafine fibers to thereby obtain a precursor sheet for artificial leather sheet. The artificial leather according to the present invention contains a polymeric elastomer. The incorporation of such a polymeric elastomer enables the realization of a dense feel, leather-like appearance, and physical properties that enable practical use

An elastic polymer is a stretchable polymeric compound having rubber elasticity and its examples include polyurethane, SBR, NBR, and acrylic resin. Of these, the preferred are polymeric elastomers containing polyurethane as main component, in particular, polymeric elastomers containing 50% or more by weight of polyurethane in view of a good balance between the texture and the physical properties.

There are various types of polyurethane including organic solvent-soluble ones that are used in a state of being dissolved in an organic solvent and water-dispersed ones that are used in a state of being dispersed in water, both of which can work for the present invention.

The polyurethane used for the present invention may be a polyurethane having a structure obtained by suitably reacting a polyol, a polyisocyanate, and a chain extender.

Exemplary polyols include polycarbonate diols, polyester diols, polyether diols, silicone diols, fluorine diols, and copolyemers prepared by combining such diols. Of these, the preferred are polycarbonate diols and polyester diols in view of the light resistance. Also preferred are polycarbonate diols in view of the hydrolytic resistance and heat resistance.

A polycarbonate diol can be produced, for example, through ester exchange reaction between alkylene glycol and carbonate or through reaction of phosgene or a chloroformate with alkylene glycol.

For example, useful alkylene glycols include linear alkylene glycols such as ethylene glycol, propylene glycol, 1,4-butane diol, 1,5-pentane diol, 1,6-hexane diol, 1,9-nonane diol, and 1,10-decane diol; branched alkylene glycols such as neopentyl glycol, 3-methyl-1,5-pentane diol, 2,4-diethyl-1,5-pentane diol, and 2-methyl-1,8-octane diol; alicyclic diols such as 1,4-cyclohexane diol; aromatic diols such as bisphenol A; and others such as glycerin, trimethylol propane, and pentaerythritol.

For the present invention, each of these diols may be either a polycarbonate diol which is produced from a single alkylene glycol or a copolymerized polycarbonate diol which is produced from two or more types of alkylene glycols.

For example, usable polyisocyanates include aliphatic polyisocyanates such as hexamethylene diisocyanate, dicyclohexylmethane diisocyanate, isophorone diisocyanate, and xylylene diisocyanate; and aromatic polyisocyanates such as diphenylmethane diisocyanate and tolylene diisocyanate, which may be used in combination. In particular, the use of aromatic polyisocyanates such as diphenylmethane diisocyanate is preferred when durability and heat resistance are important while the use of aliphatic polyisocyanates such as hexamethylene diisocyanate, dicyclohexylmethane diisocyanate, and isophorone diisocyanate is preferred when light resistance are important.

Exemplary chain extenders include amine based chain extenders such as ethylene diamine and methylene bisaniline, diol based chain extenders such as ethylene glycol, and polyamine compounds obtained by reacting polyisocyanate with water.

Any elastic polymer used for the present invention may contain elastomer resins, such as polyester-based, polyamide-based, and polyolefin-based ones, acrylic resins, and ethylene-vinyl acetate resins unless they impair the texture or performance thereof as binder. Furthermore, the elastic polymer may contain various additives including pigments such as carbon black; flame retarders such as phosphorus-based, halogen-based, and inorganic ones; antioxidants such as phenol-based, sulfur-based, and phosphorus-based ones; ultraviolet light absorbers such as benzotriazole-based, benzophenone-based, salicylate-based, cyanoacrylate-based, and oxalic acid anilide-based ones; light stabilizers such as hindered amine-based and benzoate-based ones; hydrolysis-resistant stabilizers such as polycarbodiimide; and others such as plasticizers, antistatic agents, surfactants, solidification-adjusting materials, and dyes.

The content of the elastic polymer can be adjusted appropriately considering the type, production method, and texture of the polymeric elastomer used.

The treatment of generating ultrafine fibers from the ultrafine fiber-generating fiber may be either preceded or followed by the treatment of applying the polymeric elastomer. When the treatment for generating ultrafine fibers is carried out first, the polymeric elastomer will grasp the ultrafine fibers and removal of the ultrafine fibers is thereby prevented, which will enable the production of a product that can be used for a longer period. On the other hand, when the application of a polymeric elastomer is conducted first, the ultrafine fibers will not be structurally held by the polymeric elastomer, and the resulting artificial leather will have a good texture. The order of these treatments may be appropriately selected depending on the type of polymeric elastomer used.

When the application of a polymeric elastomer is conducted after the treatment for generating ultrafine fibers, the step of applying a water-soluble resin is preferably carried out before the application of the polymeric elastomer. By including such a step of applying a water-soluble resin, the surfaces of the fibers constituting the fiber bundles of the ultrafine fibers and those constituting the woven or knitted fabric will be protected by the water-soluble resin, and the surface regions where the fibers are in contact with the polymeric elastomer will be located sporadically, instead of continuously, on the surfaces of the fibers constituting the fiber bundles of the ultrafine fibers and those constituting the woven or knitted fabric. As a consequence, the resulting artificial leather will have a good texture simultaneously with good grip feeling realized by the polymeric elastomer. The timing of applying the water-soluble resin may be either before or after the treatment for generating ultrafine fibers as long as the timing is before the application of the polymeric elastomer.

Examples of such water-soluble resins include polyvinyl alcohol, polyethylene glycol, saccharide, and starch. Of these, the preferred are polyvinyl alcohols having a saponification degree of 80% or more.

Exemplary methods used for applying the water-soluble resin to the entangled fiber mass include the impregnation of the entangled fiber mass with an aqueous solution of the water-soluble resin followed by drying. With respect to the drying conditions including the drying temperature and drying time, the temperature of the entangled fiber mass that contains the water-soluble resin is preferably suppressed to a temperature of 110°C or less from the viewpoint of suppressing the shrinkage of the woven or knitted fabric.

The amount of the water-soluble resin to be applied is preferably 1% to 30% by weight relative to the weight of the entangled fiber mass immediately before the application. An application amount of 1% by weight or more facilitates the realization of an excellent texture. At the same time, an application amount of 30% by weight or less will lead to good workability, and hence, the production of an artificial leather exhibiting good physical properties including abrasion resistance. Such an amount also allows an increased amount of the polymeric elastomer to be applied to the entangled fiber mass in the subsequent steps, and the resulting artificial leather will have a high density as well as a dense feel.

The amount of the water-soluble resin applied is more preferably 2% or more and 20% or less, and most preferably 3% or more and 10% or less. The water-soluble resin applied will be removed, for example, with hot water after the application of a polymeric elastomer.

In the production method for artificial leather, it is important that shrinking treatment is carried out after the application, followed by coagulation, of a polymeric elastomer to a precursor, namely, a laminated sheet containing an entangled fiber mass (nonwoven fabric) of ultrafine fibers (or ultrafine fiber-generating fibers) and a woven or knitted fabric.

For the production of artificial leather, the technique of shrinking the laminated sheet, or the precursor, which may be optionally prepared by disposing a woven or knitted fabric on an entangled fiber mass, before the application of a polymeric elastomer has been known as a method for achieving improved quality. An artificial leather having a nap produced though a process that includes a step of shrinking an entangled fiber mass generally enjoys improved quality due to an increased nap density.

However, an entangled fiber mass of polymer ultrafine fibers (or ultrafine fiber-generating fibers) having an increased fiber density due to shrinking treatment before the polymeric elastomer application exhibits a higher resistance to fluid passage, and this often makes it difficult to apply a polymeric elastomer in large amounts. Accordingly, it has been difficult to increase the total density, namely, the sum of the density of the fiber density and that of the polymeric elastomer, by conducting the shrinking treatment before the application of the polymeric elastomer. In other words, it has been difficult for the conventional methods to simultaneously realize a dense feel similar to that of the grain surface and dense napping, both of which are present in natural nubuck.

However, the problem described above can be obviated by the method wherein sufficient shrinking is realized after adding a polymeric elastomer as in the case of the production method for artificial leather according to the present invention. The method according to the present invention is capable of further increasing the density of the solidified polymeric elastomer, and this realizes a dense feel similar to that of nubuck.

In the production method for artificial leather according to the present invention, it is important for the shrinking treatment of the precursor sheet to be conducted in such a manner that the area shrinkage is 12% or more and 50% or less. The area shrinkage is more preferably in the range of 15% or more and 35% or less. If the area shrinkage is adjusted to this range, fine surface inequalities will be formed on the surface of the artificial leather, and a dense, wet feel as well as a consistent appearance will be realized. If the area shrinkage is 12% or less, such fine surface inequalities will not be generated in the napped surface, and such a dense, wet feel will not be developed. If the area shrinkage of 50% or more, on the other hand, it will result in the failure of the development of consistent shrinkage, and this invites an excessive increase in the surface inequalities, failing to realize a flat feel and a good appearance.

In the production method for artificial leather according to the present invention, the shrinking of the woven or knitted fabric incorporated in the precursor sheet may be employed as a method of shrinking the artificial leather precursor sheet having a polymeric elastomer applied thereto. In other words, the woven or knitted fabric firmly integrated with an entangled fiber mass of ultrafine fibers is shrunk to thereby realize consistent shrinkage. Specifically, from the viewpoint of productivity and quality, a preferred shrinking method is to perform heat treatment to shrink a thermally shrinkable woven or knitted fabric. Preferable treatment techniques include dry heat treatment using a known non-tension dryer or a tenter and bath treatment using a jet dyeing machine (high pressure).

Here, the heat treatment temperature to be used is preferably 120°C or more and more preferably 130°C or more in view of the ease of realizing a desired shrinkage rate. When shrinking is achieved by heat treatment as described above in the production method for artificial leather according to the present invention, the temperature applied to the woven or knitted fabric and the sheet during the treatment is preferably lower than the temperature of the preceding heat treatment. By suppressing the heat treatment temperature applied before the addition of a polymeric elastomer, efficient shrinking can be achieved in the heat treatment after the addition of the polymeric elastomer.

In the production method for artificial leather according to the present invention, the artificial leather precursor sheet having a polymeric elastomer applied thereto may be cut in half in the plane direction. Productivity of the artificial leather can be improved by incorporating such a cut-in-half step. For example, when the method of sandwiching the nonwoven fabric layer of ultrafine fiber-generating fibers between layers of the woven or knitted fabric is employed as the method of laminating the woven or knitted fabric, cutting of the precursor sheet in half to use the interior surfaces for napping is a preferred embodiment for realizing a dense quality.

The artificial leather according to the present invention has a nap at least on one surface. Napping is performed on the surface of the nonwoven fabric. The napping treatment can be accomplished by buffing the nonwoven fabric surface with sand paper or roll sander. In particular, if sand paper is used, a consistent, dense nap can be formed on the surface of the nonwoven fabric. In order to form consistent napping over the surface of artificial leather, the use of a smaller grinding load is preferable. To reduce the grinding load, the buffing is preferably conducted by multiple-stage buffing of three or more stages, and the sandpaper used in each stage is preferably in the range of JIS No. 150 to 600. A surface with a consistent napping length can be produced by gradually changing sandpapers from large to small grit sizes.

The artificial leather according to the present invention can be easily dyed. It is preferable for its dyeing to be conducted by using a disperse dye, cationic dye, or other type of reactive dye and using a high-temperature, high-pressure dyeing machine to allow the dyed artificial leather substrate sheet to have a soft texture. The dyeing temperature is preferably 80°C to 150°C, and more preferably 110°C or more. When dyeing and shrinking are simultaneously conducted, the dyeing temperature is preferably higher than 130°C because a desired shrinkage will be realized more easily.

If desired, furthermore, the artificial leather according to the present invention may be subjected to finishing treatment using a softening agent such as silicone, antistatic agent, water repellent agent, flame retardant agent, light resisting agent, and the like, and such finishing treatment may be conducted ether after the dyeing or in the same bath used for the dyeing. The flame retardant treatment may be accomplished by using a halogen based flame retardant such as bromine or chlorine flame retardant, or a non-halogen flame retardant such as phosphorus flame retardant, and the treatment may be conducted by immersion after the dyeing step or by back-coating techniques such as knife coating and rotary screen printing.

In addition, the artificial leather may be further subjected to known treatment techniques such as emboss roll treatment and pattern printing treatment to realize a leather-like surface.

The shrinking step for the artificial leather precursor sheet according to the present invention may be conducted at any timing as long as it is conducted after the addition of a polymeric elastomer to a laminated sheet containing an entangled fiber body of ultrafine fibers and a woven or knitted fabric. For example, the steps may be the conducted in the order of addition of a polymeric elastomer, cutting in half, napping treatment, and shrinking treatment, or in the order of addition of a polymeric elastomer, shrinking treatment, cutting in half, and napping treatment. If the shrinking treatment is achieved by heat treatment, then the shrinking treatment is preferably included in the dyeing step in order to ensure a high productivity.

The artificial leather according to the present invention has a dense, wet feel as well as excellent, consistent appearance similar to those of natural nubuck leather. Accordingly, it can be used favorably in a wide variety of applications, such as, for example, furniture, chairs, automobile interior materials, and garments, where suede-like artificial leather materials have been used conventionally.

Exemplary automobile interior material applications include common interior materials such as for seats, ceilings, pillars, interior panels, and door trimmings, and exemplary furniture and chair applications include entire covering of furniture or chairs, and partial use for seats and armrest parts. Exemplary garment applications include exterior garments such as coats, jackets, and pants.

[Examples]

The artificial leather according to the present invention is described in more detail below with reference to Examples, although the present invention is not limited only to these Examples.

[Measuring methods and processing methods for evaluation]

(1) Arithmetic average height of cross-sectional profile curve of artificial leather:

Artificial leather was cut in the direction perpendicular to the plane and machine directions to provide a specimen, which was then placed, while eliminating deformation, on the stage of a scanning electron microscope (SEM, VE-7800, manufactured by Keyence Corporation), followed by photographing the napped surface and the other surface of the artificial leather at a magnification of x100. Such photographs were taken from 10 different positions of an artificial leather specimen.

From the photographs taken, cross-sectional profile curves $Z(x)$ of the napped surface and the other surface opposite to the napped surface were obtained at intervals of 10 $\mu$m. Here, the x-axis was defined so as to represent the cross-sectional direction. The arithmetic average height was calculated for each cross-sectional profile curve. In this instance, the measuring length adopted was 1.0 mm. The average of the 10 measurements taken from each of the napped surface and the other surface opposite to the napped surface was assumed to be the arithmetic average height of the cross-sectional profile curve of each surface of the nonwoven fabric specimen.

(2) Number of asperity peaks per 1.0 mm in the cross section of artificial leather

For the 10 $\mu$m interval cross-sectional profile curves $Z(x)$ of the napped surface of artificial leather obtained in the above section (1), five simple moving averages were further taken and smoothed, and the number of asperity peaks that meet the requirements given by Equation (2) shown below was counted.
[Formula 3]

$$\frac{d}{dx}Z(x) = 0, \qquad \frac{d^2}{dx^2}Z(x) < 0 \qquad\qquad (2)$$

The number obtained was divided by the observed cross section length (mm) to give the number of asperity peaks per 1.0 mm in the cross section of the artificial leather.

(3) Depth of woven or knitted fabric lamination in artificial leather:

Artificial leather was cut in the direction perpendicular to the plane and machine directions to provide a specimen, which was then placed on the sample stage while eliminating deformation. Then, using a scanning electron microscope (SEM, VE-7800, manufactured by Keyence Corporation), the cross section of the artificial leather specimen was observed at a magnification of x200 and 10 photographs were taken from different positions. Assuming that in each photograph, the parallel direction to the cross section is the horizontal direction and that the napped layer side and the other side of the cross section are the upper side and the lower side, respectively, observation was performed to determine the highest position $z_1$ of the nonwoven fabric layer in the artificial leather, the highest position $z_2$ of the woven or knitted fabric layer, the lowest position $z_3$ of the woven or knitted fabric layer, and the lowest position $z_4$ of the artificial leather. From the measurements obtained, the depth of the woven or knitted fabric lamination was calculated by the following Equation (3).

[Formula 4]

$$\left[\text{Depth of woven or knitted fabric lamination (\%)}\right] = \frac{\frac{z_2 + z_3}{2} - z_4}{z_1 - z_4} \times 100 \qquad\qquad (3)$$

In addition, the average of the 10 calculated values was taken as the depth of the woven or knitted fabric lamination in the artificial leather.

(4) Residual elongation rate of artificial leather:

Three 20 mm $\times$ 200 mm test pieces were cut out of artificial leather. After suspending the test piece by fixing an end of its long side, marks were put at intervals of 100 mm (L0) on the test piece in the direction of its long side, and then the test piece was held for two hours with a load of 4 kgf put to the other end and subsequently left to stand for one hour after removing the load. Then, the distance (L1) between the marks was measured. From the measurements obtained, the residual elongation rate of the artificial leather was calculated by the following Equation (4), and the average over three test pieces was adopted.
[Formula 5]

$$\left[\text{Residual elongation rate of artificial leather (\%)}\right] = \frac{L_1 - L_0}{L_0} \times 100 \qquad\qquad (4)$$

(5) Evaluation of surface quality (consistency) of artificial leather:

Surface quality was evaluated based on sensory test by 10 testers. A sample was given a double circle (◎), single circle (○), triangle (△), or cross (×) when 8 or more, 5 to 7, 3 or 4, or 2 or less testers judged that it had a consistent surface in appearance and tactile tests. A sample given a double circle (◎) or a single circle (○) was judged as acceptable. In this evaluation, samples tend to be ranked high when they are free of patterns or surface inequalities detected with the naked eye or by the sense of touch while they tend to be ranked low when they have regular or irregular inequalities such as creases and crimps, have an appearance or feel with periodic features in the longitude and latitude directions such as in woven or knitted fabrics, or have local differences in tint due to difference in dyed color between the fiber and polymeric elastomer. Evaluation of surface quality in terms of the consistency of artificial leather was performed for initial-state artificial leather samples and artificial leather test pieces having undergone residual elongation rate determination under the conditions described in the above section (3).

(6) Evaluation of surface quality (feel) of artificial leather:

Surface quality was evaluated based on sensory test by 10 testers. A sample was given a double circle (◎), single circle (○), triangle (△), or cross (×) when 8 or more, 5 to 7, 3 or 4, or 2 or less testers judged that it had a nubuck-like dense, wet feel. A sample given a double circle (◎) or a single circle (○) was judged as acceptable. In this evaluation, samples tend to be ranked high when they have a natural nubuck-like feel while they tend to be ranked low when they have a suede-like feel. Evaluation of surface quality in terms of feel of artificial leather was performed for initial-state artificial leather samples and artificial leather test pieces having undergone residual elongation rate determination under the conditions described in the above section (3).

(7) Dry heat shrinkage rate of woven or knitted fabric:

A woven or knitted fabric sample (10 cm × 10 cm) was cut in the longitude and latitude directions to prepare a test piece, which was then heated in a hot air drier at a temperature of 100°C or 140°C for 5 minutes, followed by calculating the dry heat area shrinkage rate of the woven or knitted fabric from the percent change in the woven or knitted fabric in the longitude and latitude directions.

(8) Rate of shrinkage in boiling water (boiling water shrinkage rate) of raw yarn for woven or knitted fabric production:

After putting an initial load to a specimen, a distance of 500 mm was measured accurately and two end points were marked. Then the initial load was removed and the specimen was immersed in boiling water for 30 minutes. After taking it out, water was removed by light touch with water-absorbing paper or cloth and subsequent air-drying, and the initial load was put again. The distance between the two points was measured and the boiling water shrinkage rate (%) was calculated by the following equation. The measuring run was performed five times and the measurements were averaged and rounded off to the nearest tenth according to JIS Z 8401 (2011).

$$\cdot \ [\text{Boiling water shrinkage rate (\%) of raw yarn for woven or knitted fabric production}] = (500 - m) / 500) \times 100,$$

where m represents the distance (mm) between the two points.

[Example 1]

Polyethylene terephthalate used as island component and polystyrene used as sea component were melt-spun through a spinneret designed for 16-island sea-island type composite fiber with an island/sea mass ratio of 55/45, followed by stretching, crimping, and subsequent cutting to a 51 mm length to prepare raw stock of sea-island type composite fiber with a monofilament fineness of 4.3 dtex.

<Laminated sheet composed of entangled fiber mass and woven or knitted fabric>

The above raw stock of sea-island type composite fiber was processed by carding and crosslapping to provide a laminated web, which was then needle-punched at a punching rate of 100 punches/cm$^2$ so that the woven fabric would not suffer from creasing due to rapid changes in width when attaching a woven fabric. Elsewhere, a multifilament (84 dtex, 72 filaments) with a twist count of 2,500 T/m composed of monocomponent filaments with an intrinsic viscosity (IV) of 0.65 was used as weft while a multifilament (84 dtex, 72 filaments) with a twist count of 2,500 T/m composed of monocomponent filaments with an intrinsic viscosity (IV) of 0.65 was used as warp to produce a plain weave fabric having a weaving density of 97 warp yarns per 2.54 cm and 76 weft yarns per 2.54 cm, a dry heat area shrinkage rate of 1% after dry heat treatment at a temperature of 100°C for 5 minutes, and a dry heat area shrinkage rate of 17% after dry heat treatment at a temperature of 140°C for 5 minutes. The resulting plain weave fabric was attached to each side of the laminated web.

Subsequently, needle punching was performed at a punching rate (density) of 2,500 punches/cm$^2$ to produce a laminated sheet composed of a heat-shrinkable woven fabric and an entangled fiber mass of ultrafine fiber-generating type fibers having a metsuke (weight per unit surface area) of 740 g/m$^2$ and a thickness of 3.4 mm.

<Artificial leather>

The laminated sheet prepared in the above step was shrunk by hot water treatment at a temperature of 96°C and then impregnated with an aqueous solution of PVA (polyvinyl alcohol), followed by drying in hot air at a temperature of 110°C for 10 minutes, in order to add PVA to the laminated sheet in such a manner that PVA accounted for 7.6 mass% in the laminated sheet. This PVA-containing laminated sheet was immersed in trichloroethylene to dissolve and remove the sea component of ultrafine fiber-generating type polystyrene fibers, thereby providing a sea-deprived sheet composed of a plain weave fabric entangled with ultrafine fibers. The resulting laminated sheet composed of a plain weave fabric and an entangled fiber mass of ultrafine fibers was immersed in a solution of polyurethane in DMF (dimethyl formamide) with a solid content adjusted to 12%, followed by coagulating the polyurethane in an aqueous solution with a 30% DMF concentration. Subsequently, PVA and DMF was removed with hot water and dried in hot air at a temperature of 110°C for 10 minutes to provide a precursor sheet for artificial leather in which polyurethane accounted for 27 mass% of the total mass of the ultrafine fibers of the island component and the plain weave fabric.

The precursor sheet of artificial leather thus produced was cut in half in the thickness direction and the half-cut nonwoven fabric surface was ground with endless sandpaper with a sandpaper roughness number 320 to nap the exposed layer at the half-cut surface, thereby providing artificial leather gray fabric with a thickness of 0.81 mm. The artificial leather gray fabric thus produced was shrunk and dyed simultaneously at a temperature of 140°C using a jet dyeing machine. Here, the area shrinkage rate in the dyeing step was 20%. Then drying was performed using a drier to provide artificial leather. For the artificial leather thus obtained, the arithmetic average height, Pa, of the cross-sectional profile curve of the napped surface was 34 $\mu$m; the arithmetic average height of the cross-sectional profile curve of the other surface was 63% of the Pa value of the napped surface; and 3.2 asperity peaks forming irregularities of the cross section existed per 1.0 mm of the napped surface. This artificial leather had a natural nubuck-like high density nap and a surface with an agreeable wet feel to fingers. It also had a consistent appearance with little exposure of the polymeric elastomer in the napped surface and little color unevenness attributable to differences in color tone.

Furthermore, this artificial leather had a residual elongation rate of 5.8% when examined under the conditions of a load of 2 kgf/cm, a loading time of 2 hours, and a standing-still period of 1 hour after load removal until measurement. The test piece had an elegant quality and appearance similar to those seen before the test. Results are given in Table 1.

[Example 2]

<Raw stock>

Except that the monofilament fineness was 2.9 dtex, the same procedure as in Example 1 was carried out to produce raw stock of sea-island type composite fiber.

<Laminated sheet composed of entangled fiber mass and woven or knitted fabric>

Except that the metsuke was 705 g/m² and that the thickness was 3.0 mm, the same procedure as in Example 1 was carried out to produce a laminated sheet of an entangled fiber mass of sea-island type composite fiber and a woven or knitted fabric and.

<Artificial leather>

Except that the degree of grinding was controlled to adjust the thickness to 0.7 mm and that the shrinkage rate in the dyeing step was 19%, the same procedure as in Example 1 was carried out to produce artificial leather. For the artificial leather thus obtained, the arithmetic average height, Pa, of the cross-sectional profile curve of the napped surface was 28 $\mu$m; the arithmetic average height of the cross-sectional profile curve of the other surface (Surface B) was 56% of the Pa value of the napped surface; and 3.5 asperity peaks forming irregularities of the cross section existed per 1.0 mm of the napped surface. This artificial leather had a natural nubuck-like high density nap and a surface with an agreeable wet feel to fingers. It also had a consistent appearance with little exposure of the polymeric elastomer in the napped surface and little color unevenness attributable to differences in color tone.

Furthermore, this artificial leather had a residual elongation rate of 6.0% when examined under the conditions of a load of 2 kgf/cm, a loading time of 2 hours, and a standing-still period of 1 hour after load removal until measurement. The test piece had an elegant quality and appearance similar to those seen before the test. Results are given in Table 1.

[Example 3]

<Raw stock>

Except that a 36-island spinneret for sea-island type composite fiber production was used and that the monofilament fineness was 3.1 dtex, the same procedure as in Example 1 was carried out to produce raw stock of sea-island type composite fiber.

<Laminated sheet composed of entangled fiber mass and woven or knitted fabric>

Except for adopting a plain weave fabric having a weaving density of 69 warp yarns per 2.54 cm and 84 weft yarns per 2.54 cm, a dry heat area shrinkage rate of 2% after dry heat treatment at a temperature of 100°C for 5 minutes, and a dry heat area shrinkage rate of 20% after dry heat treatment at a temperature of 140°C for 5 minutes, that was produced by using, as weft, a multifilament (56 dtex, 12 filaments) with a twist count of 1,500 T/m composed of side-by-side type filaments of polyethylene terephthalate with an intrinsic viscosity (IV) of 0.78 and polyethylene terephthalate with an intrinsic viscosity (IV) of 0.51 and using, as warp, a multifilament (84 dtex, 72 filaments) with a twist count of 2,500 T/m composed of monocomponent filaments with an intrinsic viscosity (IV) of 0.65; adjusting the metsuke of the laminated sheet to 635/m$^2$; and adjusting the thickness to 2.6 mm; the same procedure as in Example 1 was carried out to produce a laminated sheet composed of an entangled fiber mass of sea-island type composite fiber and a woven or knitted fabric.

<Artificial leather>

Except that the degree of grinding was controlled to adjust the thickness to 0.6 mm and that the shrinkage rate in the dyeing step was 19%, the same procedure as in Example 1 was carried out to produce artificial leather. For the artificial leather thus obtained, the arithmetic average height, Pa, of the cross-sectional profile curve of the napped surface was 30 μm; the arithmetic average height of the cross-sectional profile curve of the other surface was 64% of the Pa value of the napped surface; and 2.8 asperity peaks forming irregularities of the cross section existed per 1.0 mm of the napped surface. This artificial leather had a natural nubuck-like high density nap and a surface with an agreeable wet feel to fingers. It also had a consistent appearance with little exposure of the polymeric elastomer in the napped surface and little color unevenness attributable to differences in color tone.

Furthermore, this artificial leather had a residual elongation rate of 15.3% when examined under the conditions of a load of 2 kgf/cm, a loading time of 2 hours, and a standing-still period of 1 hour after load removal until measurement. The test piece after the test had lost the nubuck-like surface feel that was present before the test and the polymeric elastomer was exposed in the napped surface, resulting in a non-consistent appearance. Results are given in Table 1.

[Example 4]

<Raw stock>

Except that the island/sea mass ratio was 80/20 and that the monofilament fineness was 4.2 dtex, the same procedure as in Example 1 was carried out to produce raw stock of sea-island type composite fiber.

<Laminated sheet composed of entangled fiber mass and woven or knitted fabric>

Except that the metsuke was 714 g/m$^2$ and that the thickness was 2.9 mm, the same procedure as in Example 1 was carried out to produce a laminated sheet of an entangled fiber mass of sea-island type composite fiber and a woven or knitted fabric and.

<Artificial leather>

Except that the degree of grinding was controlled to adjust the thickness to 1.1 mm and that the shrinkage rate in the dyeing step was 18%, the same procedure as in Example 1 was carried out to produce artificial leather. For the artificial leather thus obtained, the arithmetic average height, Pa, of the cross-sectional profile curve of the napped surface was 30 μm; the arithmetic average height of the cross-sectional profile curve of the other surface was 64% of the Pa value of the napped surface; and 2.6 asperity peaks forming irregularities of the cross section existed per 1.0 mm of the napped surface. This artificial leather had a natural nubuck-like high density nap and a surface with an agreeable wet feel to fingers. It also had a consistent appearance with little exposure of the polymeric elastomer in the napped surface and little color unevenness attributable to differences in color tone.

Furthermore, this artificial leather had a residual elongation rate of 5.2% when examined under the conditions of a load of 2 kgf/cm, a loading time of 2 hours, and a standing-still period of 1 hour after load removal until measurement. The test piece had an elegant quality and appearance similar to those seen before the test. Results are given in Table 1.

[Example 5]

<Artificial leather>

Except that the dyeing temperature was 135°C and that the shrinkage rate in the dyeing step was 20%, the same procedure as in Example 1 was carried out to produce artificial leather. For the artificial leather thus obtained, the arithmetic average height, Pa, of the cross-sectional profile curve of the napped surface was 32 $\mu$m; the arithmetic average height of the cross-sectional profile curve of the other surface was 66% of the Pa value of the napped surface; and 3.1 asperity peaks forming irregularities of the cross section existed per 1.0 mm of the napped surface. This artificial leather had a natural nubuck-like high density nap and a surface with an agreeable wet feel to fingers. It also had a consistent appearance with little exposure of the polymeric elastomer in the napped surface and little color unevenness attributable to differences in color tone.

Furthermore, this artificial leather had a residual elongation rate of 5.5% when examined under the conditions of a load of 2 kgf/cm, a loading time of 2 hours, and a standing-still period of 1 hour after load removal until measurement. The test piece had an elegant quality and appearance similar to those seen before the test. Results are given in Table 1.

[Example 6]

<Artificial leather>

Except that the dyeing temperature was 135°C and that the shrinkage rate in the dyeing step was 19%, the same procedure as in Example 1 was carried out to produce artificial leather. For the artificial leather thus obtained, the arithmetic average height, Pa, of the cross-sectional profile curve of the napped surface was 27 $\mu$m; the arithmetic average height of the cross-sectional profile curve of the other surface was 74% of the Pa value of the napped surface; and 3.0 asperity peaks forming irregularities of the cross section existed per 1.0 mm of the napped surface. This artificial leather had a natural nubuck-like high density nap and a surface with an agreeable wet feel to fingers. It also had a consistent appearance with little exposure of the polymeric elastomer in the napped surface and little color unevenness attributable to differences in color tone.

Furthermore, this artificial leather had a residual elongation rate of 5.7% when examined under the conditions of a load of 2 kgf/cm, a loading time of 2 hours, and a standing-still period of 1 hour after load removal until measurement. The test piece had an elegant quality and appearance similar to those seen before the test. Results are given in Table 1.

[Example 7]

<Artificial leather>

Except that the dyeing temperature was 135°C and that the shrinkage rate in the dyeing step was 19%, the same procedure as in Example 3 was carried out to produce artificial leather. For the artificial leather thus obtained, the arithmetic average height, Pa, of the cross-sectional profile curve of the napped surface was 27 $\mu$m; the arithmetic average height of the cross-sectional profile curve of the other surface was 71% of the Pa value of the napped surface; and 2.6 asperity peaks forming irregularities of the cross section existed per 1.0 mm of the napped surface. This artificial leather had a natural nubuck-like high density nap and a surface with an agreeable wet feel to fingers. It also had a consistent appearance with little exposure of the polymeric elastomer in the napped surface and little color unevenness attributable to differences in color tone.

Furthermore, this artificial leather had a residual elongation rate of 14.0% when examined under the conditions of a load of 2 kgf/cm, a loading time of 2 hours, and a standing-still period of 1 hour after load removal until measurement. The test piece after the test had lost the nubuck-like surface feel that was present before the test and the polymeric elastomer was exposed in the napped surface, resulting in a non-consistent appearance. Results are given in Table 1.

[Table 1]

[Table 1]

| | | | Example 1 | Example 2 | Example 3 | Example 4 | Example 5 | Example 6 | Example 7 |
|---|---|---|---|---|---|---|---|---|---|
| Production conditions | temperature for dry heating before dyeing | °C | none | none | none | none | none | none | none |
| | dyeing temperature | °C | 140 | 140 | 140 | 140 | 135 | 135 | 135 |
| | area shrinkage rate between gray and dyed fabric | % | 20.1 | 19.0 | 19.2 | 17.8 | 19.7 | 19.0 | 19.0 |
| | fineness of ultrafine fibers | dtex | 0.15 | 0.10 | 0.04 | 0.21 | 0.15 | 0.1 | 0.04 |
| Characteristics | Pa of napped surface | µm | 34 | 28 | 30 | 42 | 32 | 27 | 28 |
| | Pa of the other surface | µm | 21 | 16 | 19 | 26 | 21 | 20 | 20 |
| | other surface/napped surface | - | 63% | 56% | 64% | 61% | 66% | 74% | 71% |
| | existence frequency of asperity peaks | number/mm | 3.2 | 3.5 | 2.8 | 2.6 | 3.1 | 3.0 | 2.6 |
| | depth of woven or knitted fabric lamination | % | 27% | 37% | 31% | 24% | 30% | 35% | 25% |
| | residual elongation rate | % | 5.8 | 6.0 | 15.3 | 5.2 | 5.5 | 5.7 | 14.0 |
| Quality evaluation | normal state — consistency | consistency | ◎ | ◎ | ◎ | ◎ | ◎ | ◎ | ◎ |
| | normal state — texture | texture | ◎ | ◎ | ◎ | ○ | ◎ | ◎ | ◎ |
| | stretched state — consistency | consistency | ○ | ○ | × | ○ | ○ | ○ | × |
| | stretched state — texture | texture | ○ | ○ | × | ○ | ○ | ○ | × |

[Example 8]

As described in Example 1, raw stock of sea-island type composite fiber was obtained.

<Entangled body composed of nonwoven fabric and woven or knitted fabric>

As described in Example 4, a laminated sheet composed of a nonwoven fabric formed of sea-island type composite fiber and a woven or knitted fabric was obtained.

<Artificial leather>

Except that the degree of grinding was controlled to adjust the thickness to 1.1 mm and that the dyeing temperature and shrinkage rate in the dyeing step were 120°C and 18%, respectively, the same procedure as in Example 4 was carried out to produce artificial leather. For the artificial leather thus obtained, the arithmetic average height, Pa, of the cross-sectional profile curve of the napped surface was 26 $\mu$m; the arithmetic average height of the cross-sectional profile curve of the other surface was 77% of the Pa value of the napped surface; and 3.0 asperity peaks forming irregularities of the cross section existed per 1.0 mm of the napped surface. This artificial leather had a natural nubuck-like dense, wet surface feel and had a consistent appearance.

Furthermore, this artificial leather had a residual elongation rate of 5.3% when examined under the conditions of a load of 2 kgf/cm, a loading time of 2 hours, and a standing-still period of 1 hour after load removal until measurement. The test piece had an elegant quality and appearance similar to those seen before the test. Results are given in Table 2.

[Example 9]

As described in Example 1, raw stock of sea-island type composite fiber was obtained.

<Entangled body composed of nonwoven fabric and woven or knitted fabric (laminated sheet)>

As described in Example 1, a laminated sheet composed of a nonwoven fabric formed of sea-island type composite fiber and a woven or knitted fabric was obtained.

<Artificial leather>

As in Example 1, the resulting artificial leather gray fabric was shrunk, before dyeing, by performing dry heat treatment at a temperature of 170°C using a non-tension drier, followed by simultaneous shrinking and dyeing treatment using a jet dyeing machine at a temperature of 125°C. Here, the overall area shrinkage rate between the artificial leather gray fabric and the dyed fabric was 40%. Then drying was performed using a drier to provide artificial leather. For the artificial leather thus obtained, the arithmetic average height, Pa, of the cross-sectional profile curve of the napped surface was 62 $\mu$m; the arithmetic average height of the cross-sectional profile curve of the other surface was 40% of the Pa value of the napped surface; and 2.1 asperity peaks forming irregularities of the cross section existed per 1.0 mm of the napped surface. This artificial leather had a natural nubuck-like dense, wet surface feel and had a consistent appearance.

Furthermore, this artificial leather had a residual elongation rate of 11.7% when examined under the conditions of a load of 2 kgf/cm, a loading time of 2 hours, and a standing-still period of 1 hour after load removal until measurement. The test piece had an elegant quality and appearance similar to those seen before the test. Results are given in Table 2.

[Comparative example 1]

<Raw stock>

As described in Example 4, raw stock of sea-island type composite fiber was obtained.

<Laminated sheet composed of entangled fiber mass and woven or knitted fabric>

As described in Example 4, a laminated sheet of an entangled fiber mass of sea-island type composite fiber and a woven or knitted fabric and was obtained.

<Artificial leather>

Except that the dyeing temperature was 125°C in the dyeing step and that the shrinkage rate was 10%, the same procedure as in Example 1 was carried out to produce artificial leather. For the artificial leather thus obtained, the arithmetic average height, Pa, of the cross-sectional profile curve of the napped surface was 25 $\mu$m; the arithmetic average height of the cross-sectional profile curve of the other surface was 84% of the Pa value of the napped surface; and 2.8 asperity peaks forming irregularities of the cross section existed per 1.0 mm of the napped surface. Since the shrinkage rate of the artificial leather was low in the dyeing step, a sufficiently large difference in irregularities failed to be developed between the two surfaces, and the Pa value of the napped surface and the ratio between the Pa value of the non-napped surface and the Pa value of the napped surface failed to meet the requirements for realizing the effect of the invention. Accordingly, the polymeric elastomer in this artificial leather was partially exposed in the napped surface, and a non-consistent appearance developed due to a color tone difference between the fiber and the polymeric elastomer. It had a suede-like feel instead of a natural nubuck-like dense, wet surface feel.

Furthermore, this artificial leather had a residual elongation rate of 3.0% when examined under the conditions of a load of 2 kgf/cm, a loading time of 2 hours, and a standing-still period of 1 hour after load removal until measurement. The test piece had a comparable quality to that before the test. Results are given in Table 2.

[Comparative example 2]

<Raw stock>

As described in Example 3, raw stock of sea-island type composite fiber was obtained.

<Laminated sheet composed of entangled fiber mass and woven or knitted fabric>

Except that the metsuke of the laminated sheet was 740 g/m$^2$ and that the thickness was 3.1 mm, the same procedure as in Example 3 was carried out to produce a laminated sheet of an entangled fiber mass of sea-island type composite fiber and a woven or knitted fabric.

<Artificial leather>

Except that the dyeing temperature was 120°C in the dyeing step and that the shrinkage rate was 10%, the same procedure as in Example 1 was carried out to produce artificial leather. For the artificial leather thus obtained, the arithmetic average height, Pa, of the cross-sectional profile curve of the napped surface was 42 $\mu$m; the arithmetic average height of the cross-sectional profile curve of the other surface was 63% of the Pa value of the napped surface; and 1.6 asperity peaks forming irregularities of the cross section existed per 1.0 mm of the napped surface. Since the shrinkage rate of the artificial leather was low in the dyeing step, the inequalities of the napped surface had a gentle, long-periodic feature, and the existence frequency of asperity peaks in the cross-sectional profile curve of the napped surface failed to meet the requirements for realizing the effect of the invention. As a result, this artificial leather had a visible crimp-like irregular pattern on the surface, leading to a non-consistent appearance. It had a somewhat suede-like feel instead of a natural nubuck-like dense, wet surface feel.

Furthermore, this artificial leather had a residual elongation rate of 13.7% when examined under the conditions of a load of 2 kgf/cm, a loading time of 2 hours, and a standing-still period of 1 hour after load removal until measurement. After the test, the test piece had lost the irregular pattern seen before the test. Results are given in Table 2.

[Comparative example 3]

<Raw stock>

As described in Example 4, raw stock of sea-island type composite fiber was obtained.

<Entangled body composed of nonwoven fabric and woven or knitted fabric>

As described in Example 4, a laminated sheet composed of a nonwoven fabric formed of sea-island type composite fiber and a woven or knitted fabric was obtained.

<Artificial leather>

Except that the temperature for dry heat treatment performed before dyeing was 110°C, that the dyeing temperature was 110°C in the dyeing step and that the shrinkage rate was 10%, the same procedure as in Example 4 was carried out to produce artificial leather. For the artificial leather thus obtained, the arithmetic average height, Pa, of the cross-sectional profile curve of the napped surface was 21 $\mu$m; the arithmetic average height of the cross-sectional profile curve of the other surface was 90% of the Pa value of the napped surface; and 2.3 asperity peaks forming irregularities of the cross section existed per 1.0 mm of the napped surface. This artificial leather had a suede-like feel instead of a natural nubuck-like dense, wet surface feel.

Furthermore, this artificial leather had a residual elongation rate of 2.8% when examined under the conditions of a load of 2 kgf/cm, a loading time of 2 hours, and a standing-still period of 1 hour after load removal until measurement. The test piece had a comparable quality to that before the test. Results are given in Table 2.

[Table 2]

[Table 2]

| | | | Example 8 | Example 9 | Comparative example 1 | Comparative example 2 | Comparative example 3 |
|---|---|---|---|---|---|---|---|
| Production conditions | temperature for dry heating before dyeing | °C | none | 170 | none | none | 110 |
| | dyeing temperature | °C | 120 | 125 | 125 | 120 | 110 |
| | area shrinkage rate between gray and dyed fabric | % | 18.0 | 40.0 | 10.3 | 9.7 | 10.0 |
| | fineness of ultrafine fibers | dtex | 0.21 | 0.15 | 0.21 | 0.04 | 0.21 |
| Characteristics | Pa of napped surface | μm | 26 | 62 | 25 | 42 | 21 |
| | Pa of the other surface | μm | 20 | 25 | 21 | 26 | 19 |
| | other surface/napped surface | - | 77% | 40% | 84% | 63% | 90% |
| | existence frequency of asperity peaks | number/mm | 3.0 | 2.1 | 2.8 | 1.6 | 2.3 |
| | depth of woven or knitted fabric lamination | % | 33% | 24% | 37% | 13% | 33% |
| | residual elongation rate | % | 5.3 | 11.7 | 3.0 | 13.7 | 2.7 |
| Quality evaluation | normal state | consistency | ◎ | ◎ | ◎ | × | × |
| | | texture | ○ | ◎ | × | × | × |
| | stretched state | consistency | ○ | ○ | × | × | × |
| | | texture | ○ | ○ | × | × | × |

EP 3 128 071 B1

As seen from Table 1, each of the artificial leather samples prepared in Examples 1 to 9 was one including an entangled fiber mass of ultrafine fibers with a monofilament fineness of 0.01 dtex or more and 0.50 dtex or less, and a polymeric elastomer, and having at least one napped surface, the napped surface having an arithmetic average height, Pa, of 26 $\mu$m or more and 100 $\mu$m or less, the arithmetic average height, Pa, of the cross-sectional profile curve of the other surface being 20% or more and 80% or less of the former, the existence frequency of asperity peaks in the cross-sectional profile curve of the napped surface being 1.8 or more and 20 or less per 1.0 mm, and the other surface, opposite to the napped surface, of the nonwoven fabric being accompanied by a woven or knitted fabric lamination at a depth position of 10% or more and 50% or less.

Due to these effects of this constitution, they gave good results in the consistency and feel evaluations.

The artificial leather samples prepared in Examples 1, 2, 4 to 6, 8, and 9 each had a residual elongation rate of 2.0% or more and 13% or less when examined under the conditions of a load of 2 kgf/cm, a loading time of 2 hours, and a standing-still period of 1 hour after load removal until measurement. Consequently, as an additional effect, they were also found to give good results in the consistency and feel evaluations performed after stretching treatment.

For the artificial leather samples prepared in Comparative examples 1 and 3, on the other hand, the napped surface had a Pa value of less than 26 $\mu$m, and the Pa value of the other surface, opposite to the napped surface, was larger than 80% of the Pa value of the napped surface. Consequently, they failed to give good results in the consistency and feel evaluations. For the artificial leather sample prepared in Comparative example 2, furthermore, the existence frequency of asperity peaks in the cross-sectional profile curve of the napped surface was not more than 1.8 per 1.0 mm. Consequently, it failed to give good results in the consistency and feel evaluations.

[Explanation of reference symbols]

(a) : napped surface
(b) : the other surface
(c) : napped layer
(d) : nonwoven fabric layer
(e) : woven or knitted fabric layer
(f) : cross-sectional profile curve Z(x) of napped surface
(g) : cross-sectional profile curve Z(x) of the other surface
(h) : cross section thickness of artificial leather
(i) : center line of woven or knitted fabric layer
(j) : position of woven or knitted fabric lamination

**Claims**

1. Artificial leather comprising an entangled fiber mass of ultrafine fibers with a monofilament fineness of 0.01 dtex or more and 0.50 dtex or less, and a polymeric elastomer, and having at least one napped surface, the cross-sectional profile curve of the napped surface having an arithmetic average height, Pa, of 26 $\mu$m or more and 80 $\mu$m or less, the arithmetic average height, Pa, of the cross-sectional profile curve of the other surface being 20% or more and 80% or less of the arithmetic average height Pa of the cross-sectional profile curve of the napped surface, the arithmetic average height Pa of the cross-sectional profile curve is defined by the following equation (1), wherein Z(x) is the cross-sectional profile curve in the observation of the cross section of artificial leather, the existence frequency of asperity peaks in the cross-sectional profile curve Z(x) of the napped surface being 1.8 or more and 20 or less per 1.0 mm, the number of asperity peaks means the number of points x satisfying the requirements of the following equation (2) when the cross-sectional profile curve Z(x) is drawn in such a manner that the asperity peaks are in the positive direction, wherein the value obtained by dividing this number by the measurement length (mm) shows the number of asperity peaks per 1.0 mm, and the other surface being accompanied by a woven or knitted fabric lamination at a depth position of 10% or more and 50% or less, the depth of the woven or knitted fabric lamination as referred to herein means the proportion of the distance (j) between the surface (b) opposite to the napped surface of the artificial leather and the center (i) of the woven or knitted fabric used as scrim layer to the total thickness of the artificial leather:

$$Pa = \frac{1}{l_n} \int_0^{l_n} |Z(x)| dx \qquad (1)$$

$$\frac{d}{dx}Z(x)=0\,,\quad \frac{d^2}{dx^2}Z(x)<0 \qquad (2).$$

2. Artificial leather as claimed in claim 1 that had a residual elongation rate of 2.0% or more and 13% or less when examined under the conditions of a load of 2 kgf/cm, a loading time of 2 hours, and a standing-still period of 1 hour after load removal until measurement.

3. Artificial leather as claimed in either claim 1 or 2 that is free from a partial thermocompression-bonded part or resin-coated part.

**Patentansprüche**

1. Kunstleder, das eine verwickelte Fasermasse aus ultrafeinen Fasern mit einer Monofilamentfeinheit von 0,01 dtex oder mehr und 0,50 dtex oder weniger, und ein polymeres Elastomer aufweist, und das mindestens eine aufgeraute Oberfläche hat, wobei die Querschnittsprofilkurve der aufgerauten Oberfläche eine arithmetische Durchschnittshöhe Pa von 26 $\mu$m oder mehr und 80 $\mu$m oder weniger hat, wobei die arithmetische Durchschnittshöhe Pa der Querschnittsprofilkurve der anderen Oberfläche 20% oder mehr und 80% oder weniger der arithmetischen Durchschnittshöhe Pa der Querschnittsprofilkurve der aufgerauten Oberfläche beträgt, wobei die arithmetische Durchschnittshöhe Pa der Querschnittsprofilkurve durch die folgende Gleichung (1) definiert ist, wobei Z(x) die Querschnittsprofilkurve bei der Beobachtung des Querschnitts von Kunstleder ist, die Existenzhäufigkeit von Unebenheitsspitzen in der Querschnittsprofilkurve Z(x) der aufgerauten Oberfläche 1,8 oder mehr und 20 oder weniger pro 1,0 mm beträgt, die Anzahl der Unebenheitsspitzen die Anzahl von Punkten x bedeutet, die die Anforderungen der folgenden Gleichung (2) erfüllen, wenn die Querschnittsprofilkurve Z(x) so gezeichnet wird, dass die Unebenheitsspitzen in der positiven Richtung liegen, wobei der Wert, der durch Teilen dieser Zahl durch die Messlänge (mm) erhalten wird, die Anzahl der Unebenheitsspitzen pro 1,0 mm zeigt, und die andere Oberfläche von einer Laminierung aus gewebtem oder gestricktem Stoff in einer Tiefenposition von 10% oder mehr und 50% oder weniger begleitet ist, wobei die Tiefe der Laminierung aus gewebtem oder gestricktem Stoff, auf die hier Bezug genommen wird, das Verhältnis der Entfernung (j) zwischen der der aufgerauten Oberfläche des Kunstleders gegenüberliegenden Oberfläche (b) und der Mitte (i) des als Scrim-Schicht verwendeten gewebten oder gestrickten Stoffes zur Gesamtdicke des Kunstleders bedeutet:

$$Pa = \frac{1}{l_n}\int_0^{l_n}|Z(x)|dx \qquad (1)$$

$$\frac{d}{dx}Z(x)=0\,,\quad \frac{d^2}{dx^2}Z(x)<0 \qquad (2).$$

2. Kunstleder nach Anspruch 1, das eine Restdehnungsrate von 2,0% oder mehr und 13% oder weniger hatte, wenn es unter den Bedingungen einer Last von 2 kgf/cm, einer Belastungszeit von 2 Stunden, und einer Stehzeit von 1 Stunde nach dem Entfernen der Last bis zur Messung untersucht wurde.

3. Kunstleder nach Anspruch 1 oder 2, das frei von einem teilweisen thermokompressionsgebundenen Teil oder einem harzbeschichteten Teil ist.

**Revendications**

1. Cuir artificiel comprenant une masse de fibres enchevêtrées de fibres ultrafines ayant une finesse de monofilament supérieure ou égale à 0,01 dtex et inférieure ou égale à 0,50 dtex, et un élastomère polymère, et ayant au moins une surface duvetée, la courbe de profil en coupe transversale de la surface duvetée ayant une hauteur moyenne arithmétique, Pa, supérieure ou égale à 26 $\mu$m et inférieure ou égale à 80 $\mu$m, la hauteur moyenne arithmétique, Pa, de la courbe de profil en coupe transversale de l'autre surface étant supérieure ou égale à 20% et inférieure ou égale à 80% de la hauteur moyenne arithmétique Pa de la courbe de profil en coupe transversale de la surface duvetée, la hauteur moyenne arithmétique Pa de la courbe de profil en coupe transversale est définie par l'équation (1) suivante, où Z(x) est la courbe de profil en coupe transversale dans l'observation de la section transversale du cuir artificiel, la fréquence d'existence de pics d'aspérité dans la courbe de profil en coupe transversale Z(x) de la surface duvetée étant supérieure ou égale à 1,8 ou et inférieure ou égale à 20 par 1,0 mm, le nombre de pics d'aspérité désigne le nombre de points x satisfaisant aux exigences de l'équation (2) suivante lorsque la courbe de profil en coupe transversale Z(x) est tracée de manière à ce que les pics d'aspérité soient dans le sens positif, où la valeur obtenue en divisant ce nombre par la longueur de mesure (mm) indique le nombre de pics d'aspérité par 1,0 mm, et l'autre surface est accompagnée d'une stratification de tissu tissé ou tricoté à une position de profondeur supérieure ou égale à 10% et inférieure ou égale à 50%, la profondeur de la stratification de tissu tissé ou tricoté telle que mentionnée ici désigne la proportion de la distance (j) entre la surface (b) opposée à la surface duvetée du cuir artificiel et le centre (i) du tissu tissé ou tricoté utilisé en tant que couche de canevas par rapport à l'épaisseur totale du cuir artificiel :

$$Pa = \frac{1}{l_n} \int_0^{l_n} |Z(x)| dx \qquad (1)$$

$$\frac{d}{dx} Z(x) = 0 , \quad \frac{d^2}{dx^2} Z(x) < 0 \qquad (2).$$

2. Cuir artificiel tel que revendiqué dans la revendication 1, qui a un taux d'allongement résiduel supérieur ou égal à 2,0% et inférieur ou égal à 13% lorsqu'il est examiné dans les conditions d'une charge de 2 kgf/cm, d'un temps de charge de 2 heures et d'une période d'immobilisation d'une heure après le retrait de la charge jusqu'à la mesure.

3. Cuir artificiel tel que revendiqué dans la revendication 1 ou 2, qui est exempt d'une partie liée par thermocompression partielle ou d'une partie revêtue de résine.

...

[Fig. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI959878 B
- JP 2003089984 A
- JP 2011179127 A
- JP 2013181252 A
- JP 2012136801 A
- JP 2012184537 A